# EUROPEAN PATENT SPECIFICATION

(11) **EP 3 722 687 B1**
(45) Date of publication and mention of the grant of the patent: **28.08.2024**
(21) Application number: 20158163.4
(22) Date of filing: 19.02.2020
(51) Int. Cl.: F24F 5/00, F24F 11/65, F24F 11/67, F24F 13/02, F25B 13/00, F25B 25/00, F25B 41/24, F24F 140/20

(54) **AIR CONDITIONING APPARATUS**
KLIMATISIERUNGSVORRICHTUNG
CLIMATISEUR

(30) Priority: 09.04.2019 KR 20190041168
(43) Date of publication of application: 14.10.2020
(73) Proprietor: LG Electronics Inc., 07336 SEOUL (KR)
(72) Inventor: Shin, Ilyoong, 08592 Seoul (KR); Sa, Yongcheol, 08592 Seoul (KR); Song, Chiwoo, 08592 Seoul (KR); Shin, Youngjoo, 08592 Seoul (KR); Lee, Jisung, 08592 Seoul (KR)
(74) Representative: Ter Meer Steinmeister & Partner

(56) References cited:
- WO-A1-2011/064830
- GB-A- 2 213 248
- JP-A- 2001 336 858
- US-A1- 2008 022 710
- US-A1- 2014 033 749

## Description

### BACKGROUND

The present invention relates to an air conditioning apparatus.

Air conditioning apparatuses are apparatuses that maintain air within a predetermined space in the most proper state according to the use and purpose thereof. In general, such an air conditioning apparatus includes a compressor, a condenser, an expansion device, and evaporator. Thus, the air conditioning apparatus has a refrigerant cycle in which compression, condensation, expansion, and evaporation processes of a refrigerant are performed to cool or heat a predetermined space.

The predetermined space may be variously provided according to a place at which the air conditioning apparatus is used. For example, the air conditioning apparatus may be used in a home or an office.

When the air conditioning apparatus performs a cooling operation, an outdoor heat exchanger provided in an outdoor unit may serve as a condenser, and an indoor heat exchanger provided in an indoor unit may serve as an evaporator. On the other hand, when the air conditioning apparatus performs a heating operation, the indoor heat exchanger may serve as the condenser, and the outdoor heat exchanger may serve as the evaporator.

In recent years, according to environmental regulations, there is a tendency to limit the type of refrigerant used in the air conditioning apparatus and to reduce an amount of used refrigerant.

To reduce an amount of used refrigerant, a technique for performing cooling or heating by performing heat-exchange between a refrigerant and a predetermined fluid has been proposed. For example, the predetermined fluid may include water.

Regarding a system for performing cooling or heating through heat exchanger between a refrigerant and water, the following prior art document is disclosed.
1. Japanese Patent Registration No. 5279919
2. Title of The Invention: Air Conditioning Apparatus

According to the above prior art document, the air conditioning apparatus includes an outdoor unit, a heat medium converter, and an indoor unit.

The heat medium converter includes a heat exchanger, a fastening device disposed at an upstream side of the heat exchanger, and a refrigerant flow path changing device disposed at a downstream side of the heat exchanger.

The refrigerant flow path changing device is connected to a refrigerant pipe through which a refrigerant that is in a low-temperature state flows during the cooling operation.

According to the prior art document, in the cooling operation, when a portion of a plurality of heat exchangers is used, if leakage of the refrigerant is prevented by the fastening device disposed at the upstream side of the heat exchanger that is not used, the refrigerant may flow along the refrigerant pipe to generate a refrigerant flow in the heat exchanger. In this case, there is a limitation in which water is frozen in a flow path of the heat exchanger, through which the water flows.

GB 2 213 248 A provides an air-conditioning apparatus comprising an outdoor side unit having a compressor and an outdoor heat exchanger placed in contact with an outside air or a water, a plurality of room units having an indoor heat exchanger placed in contact with an indoor air for selectively providing heating or cooling, wherein a high-pressure gas pipe, connected at one end thereof to said compressor, has high-side branch pipes, a low-pressure gas pipe being connected at one end thereof to said compressor and having low- side branch pipes, at least one of said high-side branch pipes and at least one of said low-side branch pipes being connected to one end of said outdoor heat exchanger via an outside valve for changing refrigerant flow, an other portion of said high-side branch pipes having auxiliary high side pipes, an other portion of said lowside branch pipes having auxiliary low-side pipes, said auxiliary high-side pipes and said auxiliary low-side pipes being connected to one end of said indoor heat exchangers via an inside valves for changing refrigerant flow, a liquid pipe being connected to the other end of said outdoor heat exchanger and having liquid branch pipes, said liquid branch pipes connected to the other ends of said indoor heat exchangers via expansion devices, and wherein said other portion of said high-side branch pipe, at least a part of each of said auxiliary high-side pipes, said other portion of said low- side branch pipe, at least a part of each of said auxiliary low-side pipes, a part of said liquid pipe and at least a part of each of said liquid branch pipes are disposed between said outdoor unit and said room units.

WO 2011/064830 A1 presenting an air-conditioning device, JP 2001 336858 A presenting an air conditioning apparatus, US 2014/033749 A1 presenting a multi air-conditioning apparatus, and US 2008/022710 A1 presenting a simultaneous heating/cooling multi air conditioner also present relevant prior arts.

### SUMMARY

An object is to provide an air conditioning apparatus in which water is prevented from being frozen in a water flow path of a heat exchanger even though a refrigerant leaks to an unused heat exchanger when a portion of the plurality of heat exchangers is used during a cooling operation.

An object is to provide an air conditioning apparatus in which a leaking refrigerant is collected from an unused heat exchanger when the refrigerant leaks to the unused heat exchanger.

One or more of the objects are solved by the invention set out by the features of the independent claim. Features of preferred embodiments are set out in the dependent claims. In one embodiment, an air conditioning apparatus includes: an outdoor unit through which a refrigerant circulates; an indoor unit through which water circulates; a heat exchange device configured to connect the indoor unit to the outdoor unit, the heat exchange device being configured to perform heat exchange between the refrigerant and the water; and first to third outdoor unit connection pipes configured to connect the outdoor unit to the heat exchange device. A control unit is provided and configured to control operation of the air conditioning apparatus and its components.

The heat exchange apparatus includes a plurality of heat exchangers, and only a portion of the plurality of heat exchangers may be used in the cooling operation.

The valves disposed at an outlet side of the unused heat exchanger may be maintained in the closed state so that a flow of the refrigerant in the unused heat exchanger occurs even though leakage of the refrigerant occurs in the expansion valve disposed at an inlet side of the unused heat exchanger of the plurality of heat exchanger during the cooling operation.

The heat exchange device includes at least one of: a first heat exchanger and a second heat exchanger; a first branch pipe and a second branch pipe, which are branched from the first outdoor unit connection pipe; a first valve provided in each of the first branch pipe and the second branch pipe; a third branch pipe and a fourth branch pipe, which are branched from the second outdoor unit connection pipe; a second valve provided in each of the third branch pipe and the fourth branch pipe; a first refrigerant pipe and a second refrigerant pipe, which are branched from the third outdoor unit connection pipe; a first expansion valve provided in the first refrigerant pipe; and a second expansion valve provided in the second refrigerant pipe.

While the air conditioning apparatus performs a cooling operation, when the first heat exchanger is used, and the second heat exchanger is not used, the first valve is closed, the second valve provided in the third branch pipe is opened, the second valve provided in the fourth branch pipe is closed, the first expansion valve is opened, and the second expansion valve is closed.

The heat exchange device further includes a first bypass pipe bypassing the second valve in the third branch pipe and a first bypass valve provided in the first bypass pipe. The first bypass pipe may connect a portion of the third branch pipe upstream of the second valve to a portion of the third branch pipe or of a first common gas pipe downstream of the second valve. The heat exchange device further includes a second bypass pipe bypassing the second valve in the fourth branch pipe and a second bypass valve provided in the second bypass pipe. The second bypass pipe may connect a portion of the fourth branch pipe upstream of the second valve to a portion of the fourth branch pipe or of a second common gas pipe downstream of the second valve. The heat exchange device may further include at least one of: a first common gas pipe to which the first branch pipe and the third branch pipe are connected; a first bypass pipe configured to connect the third branch pipe to the first common gas pipe; a first bypass valve provided in the first bypass pipe; a second common gas pipe to which the second branch pipe and the fourth branch pipe are connected; a second bypass pipe configured to connect the fourth branch pipe to the second common gas pipe; and a second bypass valve provided in the second bypass pipe. The first common gas pipe may be connected to the first heat exchanger and/or the second common gas pipe may be connected to the second heat exchanger. The first common gas pipe may be connected to the first branch pipe and the third branch pipe downstream of the first valve in the first branch pipe and the second valve in the third branch pipe, respectively. That is, the first common gas pipe may be connected to the first branch pipe and the third branch pipe at a position between the first heat exchanger and the first valve in the first branch pipe and the second valve in the third branch pipe, respectively.

The first common gas pipe may be connected to the first heat exchanger. A second common gas pipe may be connected to the second heat exchanger. The first refrigerant pipe may be connected to the first heat exchanger. The second refrigerant pipe may be connected to the second heat exchanger.

Each of the bypass valves may be a valve that is capable of adjusting a flow rate of the refrigerant.

When the cooling operation of the air conditioning apparatus starts, the closed state of each of the first and second bypass valves may be maintained.

Each of the heat exchangers includes: a refrigerant flow path through which the refrigerant flows; and a water flow path through which the water to be heat-exchanged with the refrigerant within the refrigerant flow path flows, wherein the water flowing through the water flow path flows to the indoor unit.

The air conditioning apparatus further includes a temperature sensor configured to sense a temperature of the refrigerant flow path of the second heat exchanger.

When the temperature sensed by the temperature sensor is below a reference temperature, a pump configured to the water to the water flow path of the second heat exchanger may operate.

The pump stops after the pump may operate for a predetermined time or the pump intermittently turns on/off.

When it is sensed that the refrigerant is accumulated in the refrigerant flow path of the second heat exchanger, the second bypass valve is opened in a state in which the first bypass valve is closed.

The second bypass valve may intermittently operate several times.

The second bypass valve may operate at predetermined time intervals from a time point at which the second heat exchanger is not used.

While the air conditioning apparatus performs the cooling operation, when the first heat exchanger and the second heat exchanger are used, the first valve may be closed, the second valve may be opened, the first expansion valve and the second expansion valve may be opened, and each of the bypass valves may be closed.

When the air conditioning apparatus performs a heating operation, the first valve may be opened, the second valve may be closed, the first expansion valve and the second expansion valve may be opened, and each of the bypass valves may be closed.

In another embodiment not part of the invention, an air conditioning apparatus includes: an outdoor unit through which a refrigerant circulates; a plurality of indoor units through which water circulates; and a heat exchange device configured to connect the outdoor unit to the plurality of indoor units, the heat exchange device being configured to perform heat exchange between the refrigerant and the water, wherein the heat exchange device includes: a plurality of heat exchangers, each of which includes a refrigerant flow path and a water flow path; a plurality of expansion valves configured to expand the refrigerant to be introduced into each of the plurality of heat exchangers during a cooling operation; and a refrigerant collection part configured to collect the refrigerant accumulated in the heat exchanger, which is not used, into the outdoor unit when some of the heat exchangers are used, the rest heat exchangers are not used. A control unit may be provided and configured to control operation of the air conditioning apparatus and its components.

The heat exchange device may include: a high-pressure pipe through which a high-pressure refrigerant flows; a first valve provided in the high-pressure pipe; a low-pressure pipe through which a low-pressure refrigerant flows; and a second valve provided in the low-pressure pipe, wherein the refrigerant collection part may include: a bypass pipe connected to the low-pressure pipe so that the refrigerant flows by bypassing the second valve of the low-pressure pipe, and a bypass valve provided in the bypass pipe.

In the cooling operation, the second valve of the low-pressure pipe corresponding to the heat exchanger, which is not used, may be maintained in a closed state.

In the state in which the second valve is closed, the bypass valve may be opened to collect the refrigerant accumulated in the heat exchanger, which is not used, into the outdoor unit.

The bypass valve may intermittently operate several times.

The bypass valve may operate at predetermined time intervals from a time point at which the rest heat exchangers are not used.

The details of one or more embodiments are set forth in the accompanying drawings and the description below. Other features will be apparent from the description and drawings, and from the claims.

### BRIEF DESCRIPTION OF THE DRAWINGS

FIG. 1 is a schematic view illustrating a configuration of an air conditioning apparatus according to an embodiment of the invention.
FIG. 2 is a cycle diagram illustrating the configuration of the air conditioning apparatus according to an embodiment of the invention.
FIG. 3 is a cycle diagram illustrating flows of a refrigerant and water in the heat exchange device during a heating operation of the air conditioning apparatus according to an embodiment of the invention.
FIG. 4 is a cycle diagram illustrating flows of the refrigerant and the water in the heat exchange device during a cooling operation of the air conditioning apparatus according to an embodiment of the invention.
FIG. 5 is a cycle diagram illustrating flows of the refrigerant and the water when only a portion of a plurality of heat exchangers during the cooling operation of the air conditioning apparatus according to an embodiment of the invention.
FIG. 6 is a cycle diagram illustrating a state in which the refrigerant is collected from an unused heat exchanger.

### DETAILED DESCRIPTION OF THE EMBODIMENTS

Hereinafter, some embodiments of the present invention will be described in detail with reference to the accompanying drawings. Exemplary embodiments of the present invention will be described below in more detail with reference to the accompanying drawings. It is noted that the same or similar components in the drawings are designated by the same reference numerals as far as possible even if they are shown in different drawings. Further, in description of embodiments of the present invention, when it is determined that detailed descriptions of well-known configurations or functions disturb understanding of the embodiments of the present invention. the detailed descriptions will be omitted.

Also, in the description of the embodiments of the present invention, the terms such as first, second, A, B, (a) and (b) may be used. Each of the terms is merely used to distinguish the corresponding component from other components, and does not delimit an essence, an order or a sequence of the corresponding component. It should be understood that when one component is "connected", "coupled" or "joined" to another component, the former may be directly connected or jointed to the latter or may be "connected", coupled" or "joined" to the latter with a third component interposed therebetween.

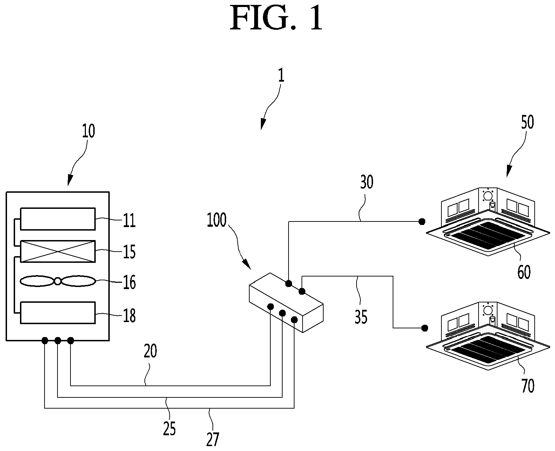

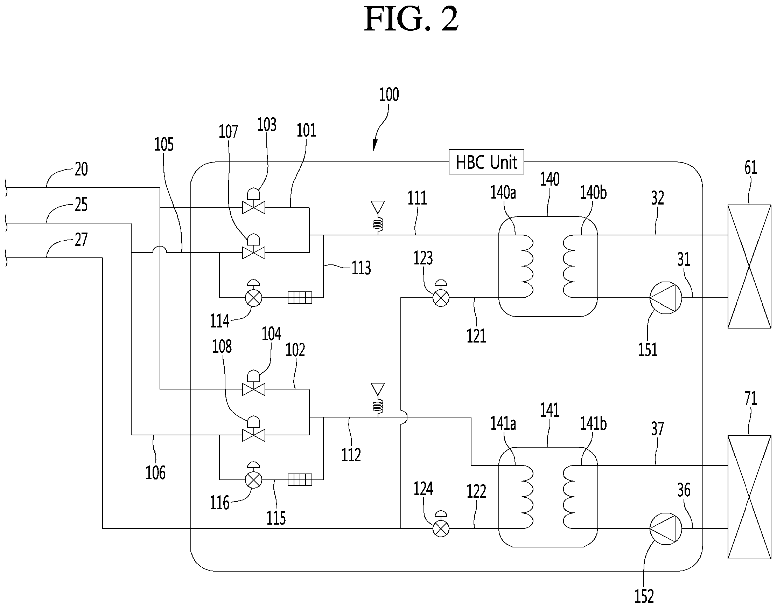

FIG. 1 is a schematic view illustrating a configuration of an air conditioning apparatus according to an embodiment of the invention, and FIG. 2 is a cycle diagram illustrating the configuration of the air conditioning apparatus according to an embodiment of the invention.

Referring to FIGS. 1 and 2, an air conditioning apparatus 1 according to an embodiment is defined in claim 1. In particular, it is connected to an outdoor unit 10, an indoor unit 50, and a heat exchange device connected to the outdoor unit 10 and the indoor unit 50.

The outdoor unit 10 and the heat exchange device 100 may be fluidly connected by a first fluid. For example, the first fluid may include a refrigerant.

The refrigerant may flow through a refrigerant flow path of a heat exchanger, which is provided in the heat exchange device 100, and the outdoor unit 10.

The outdoor unit 10 may include a compressor 11 and an outdoor heat exchanger 15.

An outdoor fan 16 may be provided at one side of the outdoor heat exchanger 15 to blow external air toward the outdoor heat exchanger 15 so that heat exchange between the external air and the refrigerant of the outdoor heat exchanger 15 is performed. The outdoor unit 10 may further include a main expansion valve 18 (EEV).

The air conditioning apparatus 1 further includes connection pipes 20, 25, and 27 connecting the outdoor unit 10 to the heat exchange device 100.

The connection pipes 20, 25, and 27 includes a first outdoor unit connection pipe 20 as a gas pipe (a high-pressure gas pipe) through which a high-pressure gas refrigerant flows, a second outdoor unit connection pipe 25 as a gas pipe (a low-pressure gas pipe) through which a low-pressure gas refrigerant flows, and a third outdoor unit connection pipe 27 as a liquid pipe through which a liquid refrigerant flows.

That is, the outdoor unit 10 and the heat exchange device 100 may have a "three pipe connection structure", and the refrigerant may circulate through the outdoor unit 10 and the heat exchange device 100 by the three connection pipes 20, 25, and 27.

The heat exchange device 100 and the indoor unit 50 may be fluidly connected by a second fluid. For example, the second fluid may include water.

The water may flow through a water flow path of a heat exchanger, which is provided in the heat exchange device 100, and the outdoor unit 10.

The heat exchange device 100 includes a plurality of heat exchangers 140 and 141. Each of the heat exchangers 140 and 141 may include, for example, a plate heat exchanger.

The indoor unit 50 may include a plurality of indoor units 60 and 70. In this embodiment, the number of plurality of indoor units 60 and 70 is not limited. In FIG. 1, for example, two indoor units 60 and 70 are connected to the heat exchange device 100.

The plurality of indoor units 60 and 70 may include a first indoor unit 60 and a second indoor unit 70

The air conditioning apparatus 1 may further include pipes 30 and 35 connecting the heat exchange device 100 to the indoor unit 50.

The pipes 30 and 35 may include a first indoor unit connection pipe 30 and a second indoor unit connection pipe 35, which connect the heat exchange device 100 to each of indoor units 60 and 70.

The water may circulate through the heat exchange device 100 and the indoor unit 50 via the indoor unit connection pipes 30 and 50.

Here, the number of indoor units increases, the number of pipes connecting the heat exchange device 100a to the indoor units may also increase.

According to the above-described configuration, the refrigerant circulating through the outdoor unit 10 and the heat exchange device 100 and the water circulating through the heat exchange device 100 and the indoor unit 50 are heat-exchanged with each other through the heat exchangers 140 and 141 provided in the heat exchange device 100.

The water cooled or heated through the heat exchange may be heat-exchanged with the indoor heat exchangers 61 and 71 to perform cooling or heating in the indoor space.

The plurality of heat exchangers 140 and 141 may be provided in the same number as the number of plurality of indoor units 60 and 70. Alternatively, two or more indoor units may be connected to one heat exchanger.

Hereinafter, the heat exchange device 100 will be described in detail.

The heat exchange device 100 includes a first heat exchanger 140 and a second heat exchanger 141, which are fluidly connected to the indoor units 60 and 70, respectively.

The first heat exchanger 140 and the second heat exchanger 141 may have the same structure.

Each of the heat exchangers 140 and 141 may include a plate heat exchanger as an example, and the water flow path and the refrigerant flow path may be alternately stacked.

Each of the heat exchangers 140 and 141 includes refrigerant flow paths 140a and 141a and water flow paths 140b and 141b.

The refrigerant flow paths 140a and 141a may be fluidly connected to the outdoor unit 10, and the refrigerant discharged from the outdoor unit 10 may be introduced into the refrigerant flow paths 140a and 141a, and then the refrigerant passing through the refrigerant flow paths 140a and 141a may be introduced into the outdoor unit 10.

Each of the water flow paths 140b and 141b may be connected to each of the indoor units 60 and 70, and the water discharged from each of the indoor units 60 and 70 may be introduced into the water flow paths 140b and 141b, and then the water passing through the water flow path 140b may be introduced into each of the indoor units 60 and 70.

The heat exchange device 100 includes a first branch pipe 101 and a second branch pipe 102, which are branched from the first outdoor unit connection pipe 20.

For example, a high-pressure refrigerant may flow through the first branch pipe 101 and the second branch pipe 102. Therefore, the first branch pipe 101 and the second branch pipe 102 may be referred to as high-pressure pipes.

The first branch pipes 101 and the second branch pipes 102 are provided with first valves 103 and 104, respectively. However, the number of branch pipes branched from the first outdoor unit connection pipe 20 is not limited.

The heat exchange device 100 includes a third branch pipe 105 and a fourth branch pipe 106, which are branched from the second outdoor unit connection pipe 25.

For example, a low-pressure refrigerant may flow through the third branch pipe 105 and the fourth branch pipe 106. Therefore, the third branch pipe 105 and the fourth branch pipe 106 may be referred to as, for example, low-pressure pipes.

The third branch pipe 105 and the fourth branch pipe 106 are provided with second valves 107 and 108, respectively. However, the number of branch pipes branched from the second outdoor unit connection pipe 25 is not limited.

The heat exchange apparatus 100 includes a first common gas pipe 111 to which the first branch pipe 101 and the third branch pipe 105 are connected and a second common gas pipe 112 to which the second branch pipe 102 and the fourth branch pipe are connected.

The first common gas pipe 111 may be connected to one end of the refrigerant flow path 140a of the first heat exchanger 140.

The refrigerant pipes 121 and 122 may be connected to the other ends of the refrigerant flow paths 140a and 141a of the heat exchangers 140 and 141, respectively.

The first refrigerant pipe 121 may be connected to the first heat exchanger 140, and the second refrigerant pipe 122 may be connected to the second heat exchanger 141.

A first expansion valve 123 is provided in the first refrigerant pipe 121, and a second expansion valve 124 is provided in the second refrigerant pipe 122.

The first refrigerant pipe 121 and the second refrigerant pipe 122 are connected to the third outdoor unit connection pipe 27.

Each of the expansion valves 123 and 124 may include, for example, an electronic expansion valve (EEV).

The EEV may adjust a degree of opening thereof to allow a pressure of the refrigerant passing through the expansion valve to drop down. For example, when the expansion valve is fully opened, the refrigerant may pass through the expansion valve without dropping down, and when the degree of opening of the expansion valve decreases, the refrigerant may be decompressed. A degree of decompression of the refrigerant may increase as the degree of opening decreases

The heat exchange device 100 further includes a first bypass pipe 113 connecting the third branch pipe 105 to the first common gas pipe 111.

The first bypass pipe 113 allows the refrigerant to bypass the second valve 107 of the third branch pipe 105. A first control valve 114 is provided in the first bypass pipe 113.

The heat exchange device 100 further includes a second bypass pipe 115 connecting the fourth branch pipe 106 to the second common gas pipe 112.

The second bypass pipe 115 allows the refrigerant to bypass the second valve 108 of the fourth branch pipe 106. The second bypass pipe 115 is provided with a second control valve 116.

The first and second control valves 114 and 116 are valves capable of adjusting a flow rate of the refrigerant. That is, the control valve 114, 116 may be an electronic expansion valve that is capable of adjusting an opening degree.

The indoor unit connection pipes 30 and 35 may include heat exchanger inlet pipes 31 and 36 and heat exchanger outlet pipes 32 and 37.

Each of the heat exchanger inlet pipes 31 and 36 may be provided with pumps 151 and 152, respectively.

Each of the heat exchanger inlet pipes 31 and 36 and each of the heat exchanger outlet pipes 32 and 37 may be connected to the indoor heat exchanger 61 and 71, respectively.

The heat exchanger inlet pipes 31 and 36 serve as indoor unit inlet pipes with respect to the indoor heat exchangers 61 and 71, and the heat exchanger outlet pipes 32 and 37 serve as the indoor heat exchangers 61 and 71 with respect to the indoor heat exchangers 61 and 71.

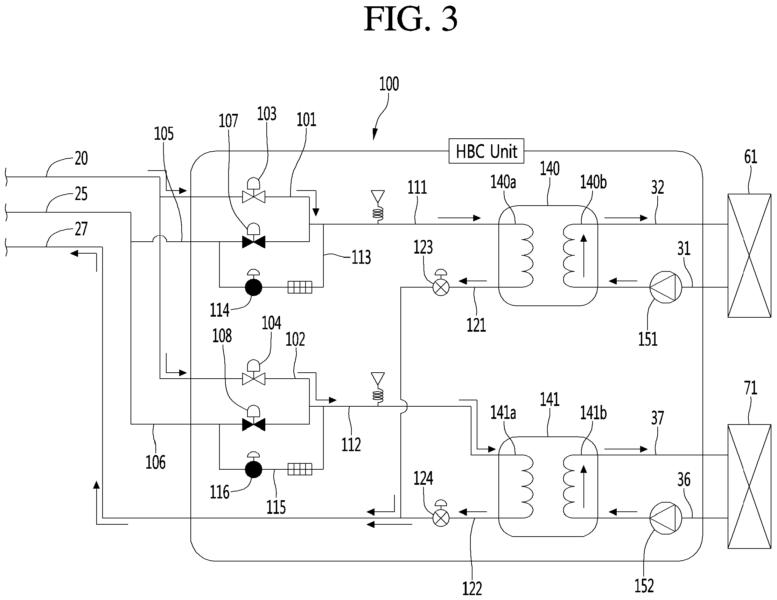

FIG. 3 is a cycle diagram illustrating flows of the refrigerant and the water in the heat exchange device during the heating operation of the air conditioning apparatus according to an embodiment.

Referring to FIG. 3, when the air conditioning apparatus 1 performs the heating operation (a plurality of indoor units operate to perform the heating operation), the high-pressure gas refrigerant compressed by the compressor 11 of the outdoor unit 10 may flow to the first outdoor unit connection pipe 20 and then be branched into the first branch pipe 101 and the second branch part 102.

When the air conditioning apparatus 1 perform the heating operation, the first valves 103 and 104 of the first and second branch pipes 101 and 102 are opened, and the second valves 107 and 108 of the third and fourth branch pipes 105 and 106 are closed. Also, the first and second bypass valves 114 and 116 are closed.

The refrigerant branched into the first branch pipe 101 flows along the first common gas pipe 111 and then flows into the refrigerant flow path 140a of the first heat exchanger 140.

The refrigerant branched into the second branch pipe 102 flows along the second common gas pipe 112 and then flows into the refrigerant flow path 141a of the second heat exchanger 141.

In this embodiment, when the air conditioning apparatus 1 performs the heating operation, each of the heat exchangers 140 and 141 may serve as a condenser.

When the air conditioning apparatus 1 performs the heating operation, the first expansion valve 123 and the second expansion valve 124 are opened.

The refrigerant passing through the refrigerant flow paths 140a and 141a of the heat exchangers 140 and 141 flows to the third outdoor unit connection pipe 27 after passing through the expansion valves 123 and 124.

The refrigerant discharged into the third outdoor unit connection pipe 27 may be introduced into the outdoor unit 10 and then be introduced into the compressor 11. The high-pressure refrigerant compressed by the compressor 11 again flows to the heat exchange device 100 through the first outdoor unit connection pipe 20.

The water flowing through the water flow paths 140b and 141b of the heat exchangers 140 and 141 may be heated by the heat-exchange with the refrigerant, and the heated water may be supplied to each of the indoor heat exchangers 61 and 71 to perform the heating.

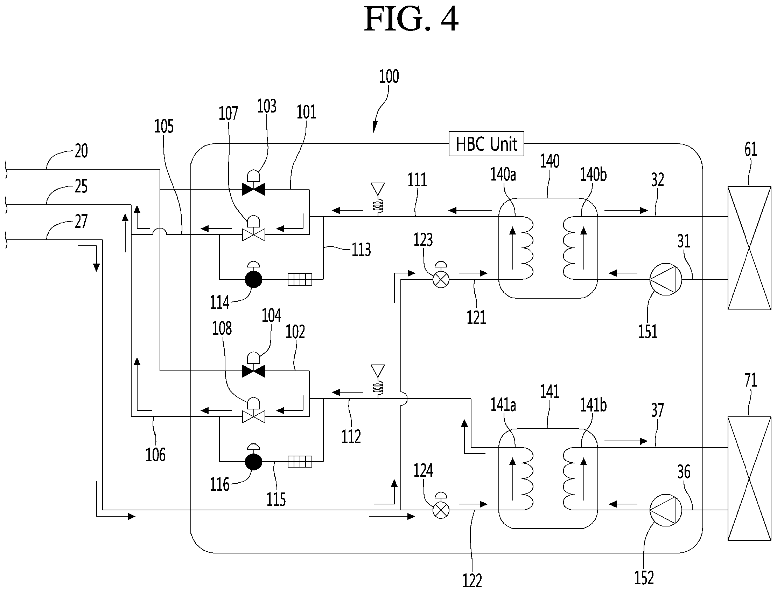

FIG. 4 is a cycle diagram illustrating flows of the refrigerant and the water in the heat exchange device during the cooling operation of the air conditioning apparatus according to an embodiment.

Referring to FIG. 4, when the air conditioning apparatus 1 performs the cooling operation (the plurality of indoor units operate to perform the cooling operation), a high-pressure liquid refrigerant condensed in the outdoor heat exchanger 15 of the outdoor unit 10 may flow to the third outdoor unit connection pipe 27 and then be distributed into the first refrigerant pipe 121 and the second refrigerant pipe 122.

Since the expansion valves 123 and 124 provided in the first and second refrigerant pipes 121 and 122 are opened to a predetermined degree, the refrigerant may be decompressed into the low-pressure refrigerant while passing through the expansion valves 123 and 124.

The decompressed refrigerant may be heat-exchanged with the water and thus be evaporated while flowing along the refrigerant flow paths 140a and 141a of the heat exchangers 140 and 141. That is, when the air conditioning apparatus 1 performs the cooling operation, each of the heat exchangers 140 and 141 may serve as an evaporator.

While the air conditioning apparatus 1 performs the cooling operation, the first valves 103 and 104 of the first and second branch pipes 101 and 102 are closed, and the second valves 107 and 108 of the third and fourth branch pipes 105 and 106 are opened. Also, the bypass valves 114 and 116 are closed.

Therefore, the refrigerant passing through the refrigerant flow paths 140a and 141a of the heat exchangers 140 and 141 flows to each of the common gas pipes 111 and 112.

The refrigerant flowing to each of the common gas pipes 111 and 112 flows into the second outdoor unit connection pipe 25 after flowing through the third and fourth branch pipes 105 and 106.

The refrigerant discharged into the second outdoor unit connection pipe 25 may be introduced into the outdoor unit 10 and then be introduced into the compressor 11. The high-pressure refrigerant compressed by the compressor 11 may be condensed in the outdoor heat exchanger 15, and the condensed liquid refrigerant may again flow along the third outdoor unit connection pipe 27.

Since the flow of the water is the same as that described in FIG. 3, a detailed description thereof will be omitted.

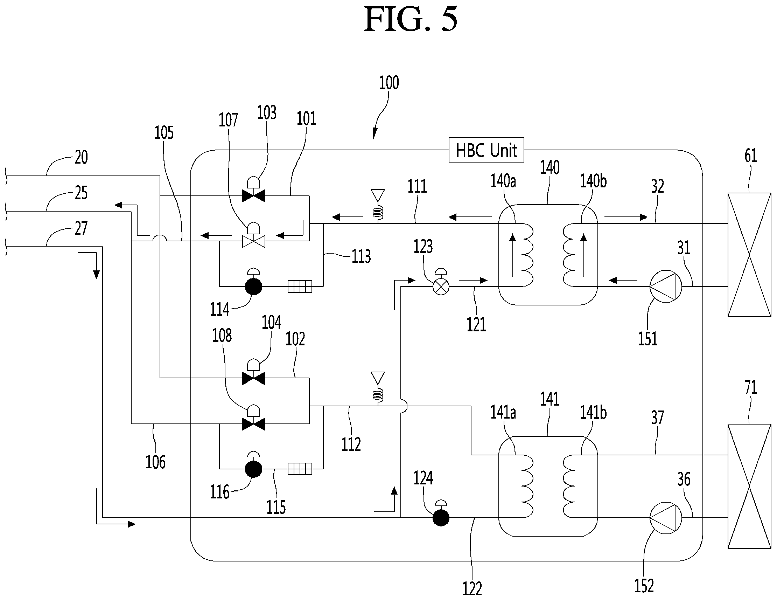

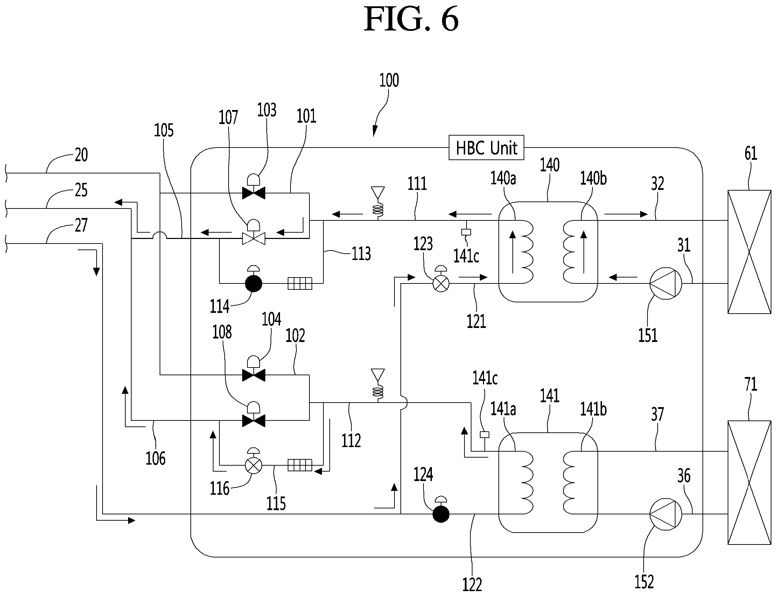

FIG. 5 is a cycle diagram illustrating flows of the refrigerant and the water when only a portion of the plurality of heat exchangers during the cooling operation of the air conditioning apparatus according to an embodiment. FIG. 6 is a cycle diagram illustrating a state in which the refrigerant is collected from an unused heat exchanger.

First, referring to FIG. 5, when the number of indoor units, in which the cooling operation is performed, is small, or a cooling load of the indoor units is small, only a portion of the plurality of heat exchangers may be used as the evaporator.

In FIG. 5, the first heat exchanger 140 is used, and the second heat exchanger 141 is not used. The following description may be equally applicable to a case in which the second heat exchanger 141 is used, and the first heat exchanger 140 is not used.

When the air conditioning apparatus 1 performs the cooling operation, the high-pressure liquid refrigerant condensed in the outdoor heat exchanger 15 of the outdoor unit 10 may flow through the third outdoor unit connection pipe 27 and then be distributed into the first refrigerant pipe 121and the second cold delivery pipe 122.

Here, the first expansion valve 123 corresponding to the used first heat exchanger 140 is opened, and the second expansion valve 124 corresponding to the unused second heat exchanger 141 is closed.

Also, the valve 107 of the third branch pipe 105 corresponding to the used first heat exchanger 140 is opened, and the valve of the fourth branch pipe 106 corresponding to the unused fourth heat exchanger 141 is closed.

Also, when the air conditioning apparatus 1 starts the cooling operation, the bypass valves 114 and 116 are in a closed state.

As a result, since the refrigerant is capable of flowing through the first refrigerant pipe 121, the refrigerant flows through the first expansion valve 123 after being expanded while passing through the first heat exchanger 140. The refrigerant flowing through the first exchanger 140 flows to the first common gas pipe 111.

The refrigerant flowing to the first common gas pipe 111 flows to the second outdoor unit connection pipe 25 after flowing through the third branch pipe 105.

The refrigerant discharged into the second outdoor unit connection pipe 25 may be introduced into the outdoor unit 10 and then be introduced into the compressor 11. The high-pressure refrigerant compressed by the compressor 11 may be condensed in the outdoor heat exchanger 15, and the condensed liquid refrigerant may again flow along the third outdoor unit connection pipe 27.

Since the valve 108 of the fourth branch pipe 106 is closed, and the second expansion valve 124 is closed, the refrigerant does not flow in the second heat exchanger 141.

Therefore, even if the water exists in the water flow path 141b within the second heat exchanger 141, the second heat exchanger 141 may be prevented from being damaged by the water in the water flow path 141b, which is frozen by the refrigerant.

Since the second heat exchanger 141 is not used, the water does not flow to the water flow path 140b of the second heat exchanger 141.

Even through the second expansion valve 124 is closed because the second heat exchanger 141 is not used, a small amount of refrigerant may leak from the second expansion valve 124.

The leakage of the refrigerant means that the refrigerant passes through the second expansion valve 124.

If the refrigerant leaks from the second expansion valve 124, the leaking refrigerant is accumulated in the refrigerant flow path 141a of the second heat exchanger 141.

When the refrigerant leaks from the second expansion valve 124, an opening degree of the second expansion valve 124 is very small, and thus, when a small amount of refrigerant passes through the second expansion valve 124, a temperature of the refrigerant may significantly decrease.

In the state in which the temperature of the refrigerant significantly decreases as described above, when the refrigerant flows through the second heat exchanger 141, the water existing in the water flow path 141b may be more easily frozen when compared to a case in which the refrigerant is stagnated in the second heat exchanger 141.

Like this embodiment, when the valve 108 of the fourth branch pipe 106 corresponding to the unused second heat exchanger 141 is closed, the refrigerant does not flow in the refrigerant flow path 141a of the second heat exchanger 141 and the second common gas pipe 112.

When the refrigerant leaks from the second expansion valve 124, the temperature of the refrigerant flow path 141a of the second heat exchanger 141 decreases. Therefore, a temperature sensor 141c may sense an inlet temperature or an outlet temperature of the refrigerant flow path 141a.

FIG. 6 illustrates an example in which the temperature sensor 141c senses the outlet temperature of the refrigerant flow path 141a.

When the temperature sensed by the temperature sensor 141c reaches a reference temperature, the second pump 152 may operate so that the water flows through the water flow path 141b to prevent the water from being frozen in the water flow path 141b.

The second pump 152 may be stopped after operating for a predetermined time or may be intermittently and repeatedly turned on and off.

When the refrigerant leaking from the second expansion valve 124 is continuously accumulated in the second heat exchanger 141, an amount of used refrigerant flowing to the first heat exchanger 140 is reduced. That is, refrigerant cycle performance may be deteriorated due to the lack of the refrigerant.

Therefore, to collect the refrigerant accumulated in the unused heat exchanger into the outdoor unit 10, the bypass valve 116 corresponding to the unused heat exchanger may be intermittently opened.

The second bypass valve 116 corresponding to the unused second heat exchanger 141 is opened. Here, an opening degree of the second bypass valve 116 may be adjusted to control an amount of refrigerant that is collected into the outdoor unit 10.

The refrigerant that is in an abnormal state may leak into the second heat exchanger 141. When a time for which the refrigerant is stagnated in the second heat exchanger 141 increases, the gas refrigerant may be condensed into the liquid refrigerant. As a result, most of the refrigerant accumulated in the second heat exchanger 141 may be a liquid refrigerant.

When an amount of liquid refrigerant to be collected is large because the opening degree of the second bypass valve 116 is large, the time taken to collect the refrigerant may decrease. However, the low pressure of the compressor may increase by the liquid refrigerant that is suddenly collected, and thus, the cycle performance may be deteriorated.

Therefore, in this embodiment, as illustrated in FIG. 6, the opening degree of the second bypass valve 116 may be adjusted so that a small amount of refrigerant is repeatedly collected several times

For example, the refrigerant may be collected by the second bypass valve 116 at a predetermined time interval from a time point at which the second heat exchanger 141 is not used

Alternatively, when it is determined that the collection of the refrigerant is required by determining a state of the refrigerant flowing through the outdoor unit 10 and the heat exchange device 100, the second bypass valve 116 may operate.

When the second bypass valve 116 operates, the refrigerant accumulated in the second heat exchanger 141 flows to the second outdoor unit connection pipe 25 via the second common gas pipe 112 and the second bypass pipe 115.

According to the proposed embodiment, when a portion of the plurality of heat exchangers is used, since the refrigerant does not flow in the unused heat exchanger even though the refrigerant leaks to the unused heat exchanger, the water in the water flow path of the unused heat exchanger may be prevented from being frozen.

Also, when the refrigerant leaks to the unused heat exchanger, the leaking refrigerant may be collected from the unused heat exchanger to the outdoor unit, and thus the shortage of the refrigerant may be prevented.

In this embodiment, the pipe and the valve, through which the refrigerant accumulated in the unused heat exchanger is collected into the outdoor unit, may referred to as a refrigerant collection part. For example, the refrigerant collection part may include the bypass pipe and the bypass valve.

## Claims

1. An air conditioning apparatus comprising:
an outdoor unit (10) for circulating refrigerant therethrough;
at least one indoor unit (50) for circulating water therethrough;
a heat exchange device (100) connected to the indoor unit (50) and to the outdoor unit (10) for performing heat exchange between the refrigerant and the water;
first to third outdoor unit connection pipes (20, 25, 27) connecting the outdoor unit (10) to the heat exchange device (100), respectively; and
a control unit configured to control at least one of the outdoor unit (10), the indoor unit (50) and the heat exchange device (100);
wherein the heat exchange device (100) comprises:
a first heat exchanger (140) and a second heat exchanger (141);
a first branch pipe (101) and a second branch pipe (102), which are branched from the first outdoor unit connection pipe (20), respectively;
a first valve (103, 104) respectively provided in the first branch pipe (101) and in the second branch pipe (102);
a third branch pipe (105) and a fourth branch pipe (106), which are branched from the second outdoor unit connection pipe (25), respectively;
a second valve (107, 108) respectively provided in the third branch pipe (105) and in the fourth branch pipe (106);
a first bypass pipe (113) bypassing the second valve (107) provided in the third branch pipe (105) and a first bypass valve (114) provided in the first bypass pipe (113);
a second bypass pipe (115) bypassing the second valve (108) provided in the fourth branch pipe (106) and a second bypass valve (116) provided in the second bypass pipe (115);
a first refrigerant pipe (121) and a second refrigerant pipe (122), which are branched from the third outdoor unit connection pipe (27), respectively;
a first expansion valve (123) provided in the first refrigerant pipe (121); and
a second expansion valve (124) provided in the second refrigerant pipe (122);
wherein each of the first and second heat exchangers (140, 141) comprises:
a refrigerant flow path (140a, 141a) allowing the refrigerant to flow therethrough;
a water flow path (140b, 141b) allowing the water to be heat-exchanged with the refrigerant within the refrigerant flow path (140a, 141a) to flow therethrough, wherein the water flow path (140b, 141b) is connected to the indoor unit (50) for the water to flow from the water flow path (140b, 141b) of the respective heat exchanger (140, 141) to the indoor unit (50); and
a temperature sensor (141c) arranged to sense a temperature of the refrigerant in the refrigerant flow path (141a) of the second heat exchanger (141);
wherein, when in a cooling operation of the air conditioning apparatus, the control unit is configured to control that only the first heat exchanger (140) is to be used, the first valves (103, 104) are closed, the second valve (107) provided in the third branch pipe (105) is open, the second valve (108) provided in the fourth branch pipe (106) is closed, the first expansion valve (123) is open, and the second expansion valve (124) is closed, the first bypass valve (114) and the second bypass valve (116) are closed; and
wherein, when it is sensed by the temperature sensor (141c) that refrigerant leaking from the second expansion valve (124) is accumulated in the refrigerant flow path (141a) of the second heat exchanger (141), the control unit is configured to control that the second bypass valve (116) is opened while the first bypass valve (114) is closed.

2. The air conditioning apparatus of claim 1, wherein the first and/or second bypass valve (114, 116) is a valve configured for adjusting a flow rate of the refrigerant.

3. The air conditioning apparatus of claim 1 or 2, wherein, when the cooling operation of the air conditioning apparatus starts, the control unit is configured to control that a closed state of the first and/or second bypass valve (114, 116) is maintained.

4. The air conditioning apparatus of claim 1, 2 or 3, wherein the control unit is configured to control that the first and/or second bypass valve (114, 116) is closed in a heating operation of the air conditioning apparatus and/or in a cooling operation where the first and the second heat exchanger (140, 141) are operated.

5. The air conditioning apparatus according to any one of the preceding claims, wherein the heat exchange device (100) further comprises:
a first common gas pipe (111) connected to the first branch pipe (101) and the third branch pipe (105); and/or
a second common gas pipe (112) connected to the second branch pipe (105) and the fourth branch pipe (106).

6. The air conditioning apparatus of claim 5, wherein the first common gas pipe (111) and/or the first refrigerant pipe (121) is connected to the first heat exchanger (140), and/or wherein the second common gas pipe (112) and/or the second refrigerant pipe (122) is connected to the second heat exchanger (141).

7. The air conditioning apparatus of claim 6, further comprising a temperature sensor (141c) provided respectively in the first common gas pipe (111) and/or in the second common gas pipe (112) for sensing a temperature of the refrigerant flowing therein.

8. The air conditioning apparatus according to any one of the preceding claims, further comprising a pump (152) configured to pump water to the water flow path (141b) of the second heat exchanger (141),
wherein, when the temperature sensed by the temperature sensor (141c) is below a reference temperature, the control unit is configured to operate the pump (152).

9. The air conditioning apparatus of claim 8, wherein the control unit is configured to stop operation of the pump (152) after the pump (152) operates for a predetermined time or the control unit is configured to operate the pump (152) intermittently.

10. The air conditioning apparatus according to any one of the preceding claims, wherein the control unit is configured to operate the second bypass valve (116) intermittently at predetermined time intervals from a time point at which only the first heat exchanger (140) is used in the cooling operation.

11. The air conditioning apparatus according to any one of the preceding claims, wherein, when the first heat exchanger (140) and the second heat exchanger (141) are used in the cooling operation of the air conditioning apparatus, the control unit is configured to control that the first valves (103, 104) are closed, the second valves (107, 108) are open, and the first expansion valve (123) and the second expansion valve (124) are open.

12. The air conditioning apparatus according to any one of the preceding claims, wherein, in a heating operation of the air conditioning apparatus, the control unit is configured to control that the first valves (103, 104) are open, the second valves (107, 108) are closed, and the first expansion valve (123) and the second expansion valve (124) are opened.

## Patentansprüche

1. Klimaanlage, die Folgendes umfasst:
eine Außeneinheit (10), durch die Kältemittel zirkuliert;
mindestens eine Inneneinheit (50), durch die Wasser zirkuliert;
eine Wärmetauschvorrichtung (100), die mit der Inneneinheit (50) und mit der Außeneinheit (10) verbunden ist, um einen Wärmetausch zwischen dem Kältemittel und dem Wasser durchzuführen;
erste bis dritte Außeneinheit-Verbindungsleitungen (20, 25, 27), die jeweils die Außeneinheit (10) mit der Wärmetauschvorrichtung (100) verbinden; und
eine Steuereinheit, die konfiguriert ist, die Außeneinheit (10), die Inneneinheit (50) und/oder die Wärmetauschvorrichtung (100) zu steuern;
wobei die Wärmetauschvorrichtung (100) Folgendes umfasst:
einen ersten Wärmetauscher (140) und einen zweiten Wärmetauscher (141);
eine erste Abzweigleitung (101) und eine zweite Abzweigleitung (102), die jeweils von der ersten Außeneinheit-Verbindungsleitung (20) abzweigen;
ein erstes Ventil (103, 104), das in der ersten Abzweigleitung (101) bzw. in der zweiten Abzweigleitung (102) vorgesehen ist;
eine dritte Abzweigleitung (105) und eine vierte Abzweigleitung (106), die jeweils von der zweiten Außeneinheit-Verbindungsleitung (25) abzweigen;
ein zweites Ventil (107, 108), das in der dritten Abzweigleitung (105) bzw. in der vierten Abzweigleitung (106) vorgesehen ist;
eine erste Umgehungsleitung (113), die das zweite Ventil (107), das in der dritten Abzweigleitung (105) vorgesehen ist, und ein erstes Umgehungsventil (114), das in der ersten Umgehungsleitung (113) vorgesehen ist, umgeht;
eine zweite Umgehungsleitung (115), die das zweite Ventil (108), das in der vierten Abzweigleitung (106) vorgesehen ist, und ein zweites Umgehungsventil (116), das in der zweiten Umgehungsleitung (115) vorgesehen ist, umgeht;
eine erste Kältemittelleitung (121) und eine zweite Kältemittelleitung (122), die jeweils von der dritten Außeneinheit-Verbindungsleitung (27) abzweigen;
ein erstes Expansionsventil (123), das in der ersten Kältemittelleitung (121) vorgesehen ist; und
ein zweites Expansionsventil (124), das in der zweiten Kältemittelleitung (122) vorgesehen ist;
wobei der erste und der zweite Wärmetauscher (140, 141) Folgendes umfassen:
einen Kältemittelströmungsweg (140a, 141a), durch den das Kältemittel strömen kann;
einen Wasserströmungsweg (140b, 141b), durch den das Wasser, das in dem Kältemittelströmungsweg (140a, 141a) mit dem Kältemittel Wärme tauschen soll, strömen kann, wobei der Wasserströmungsweg (140b, 141b) mit der Inneneinheit (50) verbunden ist, damit das Wasser von dem Wasserströmungsweg (140b, 141b) des jeweiligen Wärmetauschers (140, 141) zu der Inneneinheit (50) strömen kann; und
einen Temperatursensor (141c), der angeordnet ist, um eine Temperatur des Kältemittels in dem Kältemittelströmungsweg (141a) des zweiten Wärmetauschers (141) zu erfassen;
wobei die Steuereinheit dann, wenn sie sich im Kühlbetrieb der Klimaanlage befindet, konfiguriert ist, derart zu steuern, dass nur der erste Wärmetauscher (140) verwendet wird, die ersten Ventile (103, 104) geschlossen sind, das zweite Ventil (107), das in der dritten Verzweigungsleitung (105) vorgesehen ist, offen ist, das zweite Ventil (108), das in der vierten Verzweigungsleitung (106) vorgesehen ist, geschlossen ist, das erste Expansionsventil (123) offen ist, das zweite Expansionsventil (124) geschlossen ist, und das erste Umgehungsventil (114) und das zweite Umgehungsventil (116) geschlossen sind; und
wobei die Steuereinheit konfiguriert ist, dann, wenn der Temperatursensor (141c) detektiert, dass Kältemittel, das aus dem zweiten Expansionsventil (124) ausströmt, in dem Kältemittelströmungsweg (141a) des zweiten Wärmetauschers (141) gesammelt wird, zu steuern, dass das zweite Umgehungsventil (116) geöffnet wird, während das erste Umgehungsventil (114) geschlossen wird.

2. Klimaanlage nach Anspruch 1, wobei das erste und/oder das zweite Umgehungsventil (114, 116) Ventile sind, die konfiguriert sind, eine Durchflussmenge des Kältemittels einzustellen.

3. Klimaanlage nach Anspruch 1 oder 2, wobei die Steuereinheit konfiguriert ist, dann, wenn der Kühlbetrieb der Klimaanlage beginnt, zu steuern, dass ein geschlossener Zustand des ersten und/oder des zweiten Umgehungsventils (114, 116) beibehalten wird.

4. Klimaanlage nach Anspruch 1, 2 oder 3, wobei die Steuereinheit konfiguriert ist, zu steuern, dass das erste und/oder das zweite Umgehungsventil (114, 116) in einem Heizbetrieb der Klimaanlage und/oder in einem Kühlbetrieb, in dem der erste und der zweite Wärmetauscher (140, 141) betrieben werden, geschlossen sind.

5. Klimaanlage nach einem der vorgehenden Ansprüche, wobei die Wärmetauschvorrichtung (100) ferner Folgendes umfasst:
eine erste gemeinsame Gasleitung (111), die mit der ersten Abzweigleitung (101) und der dritten Abzweigleitung (105) verbunden ist; und/oder
eine zweite gemeinsame Gasleitung (112), die mit der zweiten Abzweigleitung (105) und der vierten Abzweigleitung (106) verbunden ist.

6. Klimaanlage nach Anspruch 5, wobei die erste gemeinsame Gasleitung (111) und/oder die erste Kältemittelleitung (121) mit dem ersten Wärmetauscher (140) verbunden sind und/oder wobei die zweite gemeinsame Gasleitung (112) und/oder die zweite Kältemittelleitung (122) mit dem zweiten Wärmetauscher (141) verbunden sind.

7. Klimaanlage nach Anspruch 6, die ferner einen Temperatursensor (141c) umfasst, der jeweils in der ersten gemeinsamen Gasleitung (111) und/oder in der zweiten gemeinsamen Gasleitung (112) vorgesehen ist, um eine Temperatur des Kältemittels, das darin strömt, zu detektieren.

8. Klimaanlage nach einem der vorgehenden Ansprüche, die ferner eine Pumpe (152) umfasst, die konfiguriert ist, Wasser in den Wasserströmungsweg (141b) des zweiten Wärmetauschers (141) zu pumpen,
wobei die Steuereinheit konfiguriert ist, dann, wenn die Temperatur, die durch den Temperatursensor (141c) detektiert wird, unterhalb einer Referenztemperatur liegt, die Pumpe (152) zu betreiben.

9. Klimaanlage nach Anspruch 8, wobei die Steuereinheit konfiguriert ist, den Betrieb der Pumpe (152) zu beenden, nachdem die Pumpe (152) für eine vorgegebene Zeit gearbeitet hat, oder die Steuereinheit konfiguriert ist, die Pumpe (152) intermittierend zu betreiben.

10. Klimaanlage nach einem der vorgehenden Ansprüche, wobei die Steuereinheit konfiguriert ist, das zweite Umgehungsventil (116) ab einem Zeitpunkt, zu dem nur der erste Wärmetauscher (140) im Kühlbetrieb verwendet wird, in vorgegebenen Zeitintervallen intermittierend zu betreiben.

11. Klimaanlage nach einem der vorgehenden Ansprüche, wobei dann, wenn der erste Wärmetauscher (140) und der zweite Wärmetauscher (141) im Kühlbetrieb der Klimaanlage verwendet werden, die Steuereinheit konfiguriert ist, zu steuern, dass die ersten Ventile (103, 104) geschlossen sind, die zweiten Ventile (107, 108) offen sind und das erste Expansionsventil (123) und das zweite Expansionsventil (124) offen sind.

12. Klimaanlage nach einem der vorgehenden Ansprüche, wobei die Steuereinheit konfiguriert ist, in einem Heizbetrieb der Klimaanlage zu steuern, dass die ersten Ventile (103, 104) offen sind, die zweiten Ventile (107, 108) geschlossen sind und das erste Expansionsventil (123) und das zweite Expansionsventil (124) geöffnet sind.

## Revendications

1. Appareil de climatisation comportant :
une unité extérieure (10) pour faire circuler du fluide frigorigène à travers celle-ci ;
au moins une unité intérieure (50) pour faire circuler de l'eau à travers celle-ci ;
un dispositif d'échange de chaleur (100) relié à l'unité intérieure (50) et à l'unité extérieure (10) pour effectuer un échange de chaleur entre le fluide frigorigène et l'eau ;
des premier à troisième tuyaux de raccordement d'unité extérieure (20, 25, 27) reliant l'unité extérieure (10) au dispositif d'échange de chaleur (100), respectivement ; et
une unité de commande configurée pour commander au moins une unité parmi l'unité extérieure (10), l'unité intérieure (50) et le dispositif d'échange de chaleur (100);
dans lequel le dispositif d'échange de chaleur (100) comporte :
un premier échangeur de chaleur (140) et un second échangeur de chaleur (141) ;
un premier tuyau d'embranchement (101) et un deuxième tuyau d'embranchement (102), qui bifurquent à partir du premier tuyau de raccordement d'unité extérieure (20), respectivement ;
une première vanne (103, 104) respectivement agencée dans le premier tuyau d'embranchement (101) et dans le second tuyau d'embranchement (102) ;
un troisième tuyau d'embranchement (105) et un quatrième tuyau d'embranchement (106), qui bifurquent à partir du deuxième tuyau de raccordement d'unité extérieure (25), respectivement ;
une seconde vanne (107, 108) respectivement agencée dans le troisième tuyau d'embranchement (105) et dans le quatrième tuyau d'embranchement (106) ;
un premier tuyau de dérivation (113) contournant la seconde vanne (107) agencée dans le troisième tuyau d'embranchement (105) et une première vanne de dérivation (114) agencée dans le premier tuyau de dérivation (113) ;
un second tuyau de dérivation (115) contournant la seconde vanne (108) agencée dans le quatrième tuyau d'embranchement (106) et une seconde vanne de dérivation (116) agencée dans le second tuyau de dérivation (115) ;
un premier tuyau de fluide frigorigène (121) et un second tuyau de fluide frigorigène (122), qui bifurquent à partir du troisième tuyau de raccordement d'unité extérieure (27), respectivement ;
une première soupape de détente (123) agencée dans le premier tuyau de fluide frigorigène (121) ; et
une seconde soupape de détente (124) agencée dans le second tuyau de fluide frigorigène (122) ;
dans lequel chacun des premier et second échangeurs de chaleur (140, 141) comporte :
un trajet d'écoulement de fluide frigorigène (140a, 141a) permettant au fluide frigorigène de s'écouler par celui-ci ;
un trajet d'écoulement d'eau (140b, 141b) permettant à l'eau d'échanger de la chaleur avec le fluide frigorigène dans le trajet d'écoulement de fluide frigorigène (140a, 141a) pour s'écouler par celui-ci, dans lequel le trajet d'écoulement d'eau (140b, 141b) est relié à l'unité intérieure (50) pour que l'eau s'écoule à partir du trajet d'écoulement d'eau (140b, 141b) de l'échangeur de chaleur (140, 141) respectif jusqu'à l'unité intérieure (50) ; et
un capteur de température (141c) conçu pour détecter une température du fluide frigorigène dans le trajet d'écoulement de fluide frigorigène (141a) du second échangeur de chaleur (141) ;
dans lequel, lors d'une opération de refroidissement de l'appareil de climatisation, l'unité de commande est configurée pour commander l'utilisation du premier échangeur de chaleur (140) uniquement, la fermeture des premières vannes (103, 104), l'ouverture de la seconde vanne (107) agencée dans le troisième tuyau d'embranchement (105), la fermeture de seconde vanne (108) agencée dans le quatrième tuyau d'embranchement (106), l'ouverture de la première soupape de détente (123) et la fermeture de la seconde soupape de détente (124), la fermeture de la première vanne de dérivation (114) et de la seconde vanne de dérivation (116) ; et
dans lequel, lorsque le capteur de température (141c) détecte que du fluide frigorigène s'échappant du second détendeur (124) s'accumule dans le trajet d'écoulement de fluide frigorigène (141a) du second échangeur de chaleur (141), l'unité de commande est configurée pour commander l'ouverture de la seconde vanne de dérivation (116) pendant la fermeture de la première vanne de dérivation (114).

2. Appareil de climatisation selon la revendication 1, dans lequel la première et/ou seconde vanne de dérivation (114, 116) est une vanne configurée pour régler un débit du fluide frigorigène.

3. Appareil de climatisation selon la revendication 1 ou 2, dans lequel, lorsque l'opération de refroidissement de l'appareil de climatisation débute, l'unité de commande est configurée pour commander le maintien d'un état fermé de la première et/ou seconde vanne de dérivation (114, 116).

4. Appareil de climatisation selon la revendication 1, 2 ou 3, dans lequel l'unité de commande est configurée pour commander la fermeture de la première et/ou seconde vanne de dérivation (114, 116) pendant une opération de chauffage de l'appareil de climatisation et/ou pendant une opération de refroidissement où les premier et second échangeurs de chaleur (140, 141) fonctionnent.

5. Appareil de climatisation selon l'une quelconque des revendications précédentes, dans lequel le dispositif d'échange de chaleur (100) comporte en outre :
un premier tuyau de gaz commun (111) raccordé au premier tuyau d'embranchement (101) et au troisième tuyau d'embranchement (105) ; et/ou
un second tuyau de gaz commun (112) raccordé au deuxième tuyau d'embranchement (105) et au quatrième tuyau d'embranchement (106).

6. Appareil de climatisation selon la revendication 5, dans lequel le premier tuyau de gaz commun (111) et/ou le premier tuyau de fluide frigorigène (121) est raccordé au premier échangeur de chaleur (140), et/ou dans lequel le second tuyau de gaz commun (112) et/ou le second tuyau de fluide frigorigène (122) est raccordé au second échangeur de chaleur (141).

7. Appareil de climatisation selon la revendication 6, comportant en outre un capteur de température (141c) respectivement agencé dans le premier tuyau de gaz commun (111) et/ou dans le second tuyau de gaz commun (112) pour détecter une température du fluide frigorigène s'écoulant dans celui-ci.

8. Appareil de climatisation selon l'une quelconque des revendications précédentes, comportant en outre une pompe (152) configurée pour pomper de l'eau jusqu'au trajet d'écoulement d'eau (141b) du second échangeur de chaleur (141),
dans lequel, lorsque la température détectée par le capteur de température (141c) est inférieure à une température de référence, l'unité de commande est configurée pour faire fonctionner la pompe (152).

9. Appareil de climatisation selon la revendication 8, dans lequel l'unité de commande est configurée pour arrêter le fonctionnement de la pompe (152) après un fonctionnement de la pompe (152) pendant un temps prédéterminé, ou l'unité de commande est configurée pour faire fonctionner la pompe (152) par intermittence.

10. Appareil de climatisation selon l'une quelconque des revendications précédentes, dans lequel l'unité de commande est configurée pour faire fonctionner la seconde vanne de dérivation (116) par intermittence à des intervalles de temps prédéterminés à partir d'un instant auquel seul le premier échangeur de chaleur (140) est utilisé pendant l'opération de refroidissement.

11. Appareil de climatisation selon l'une quelconque des revendications précédentes, dans lequel, lorsque le premier échangeur de chaleur (140) et le second échangeur de chaleur (141) sont utilisés pendant l'opération de refroidissement de l'appareil de climatisation, l'unité de commande est configurée pour commander la fermeture des premières vannes (103, 104), l'ouverture des secondes vannes (107, 108) et l'ouverture de la première soupape de détente (123) et de la seconde soupape de détente (124).

12. Appareil de climatisation selon l'une quelconque des revendications précédentes, dans lequel, pendant une opération de chauffage de l'appareil de climatisation, l'unité de commande est configurée pour commander l'ouverture des premières vannes (103, 104), la fermeture des secondes vannes (107, 108), et l'ouverture de la première soupape de détente (123) et de la seconde soupape de détente (124).
